# EUROPEAN PATENT APPLICATION

(11) **EP 4 254 709 A1**
(43) Date of publication of application: **04.10.2023**
(21) Application number: 22165538.4
(22) Date of filing: 30.03.2022
(51) Int. Cl.: H02J 3/28, F02C 9/00, H02J 3/38, H02J 15/00

(54) **METHOD FOR HYDROGEN PLANT OPTIMIZATION, AND SYSTEM COMPRISING AN OPTIMIZED HYDROGEN PLANT**

(71) Applicant: H2GS II AB, 114 57 Stockholm (SE)
(72) Inventor: NACHEMSON, Ian, 114 57 Stockholm (SE); BERG, Jonas, 111 53 Stockholm (SE); RYTTBERG-WALLGREN, Kajsa, 114 57 Stockholm (SE); GONTEK, Mirko, 111 53 STOCKHOLM (SE); TWYMAN, Nick, 114 57 Stockholm (SE); REHNMAN, Gustav, 114 57 Stockholm (SE)
(74) Representative: AWA Sweden AB

(57) **Abstract**

A method (100) of optimizing at least a part of a hydrogen, H₂, production plant (300), and a system comprising the at least a part of the hydrogen production plant, are provided. The method comprises obtaining a first set of data (110) associated with component categories (120a-c) comprising component category type(s) (130a-c). The first set of data comprises a first and a second subset (150, 160) associated with a capital expenditure, and am operational expenditure, respectively, of each component category type. The method further comprises obtaining a second set of data (180) and a third set of data (190) associated with a cost of electrical power and ancillary service(s), respectively, and determining (200) the at least a part of the hydrogen production plant by a combination of the component category type(s) based on optimization criterion(s) (250) as a function of the first, second and third set of data.

## Description

### FIELD OF THE INVENTION

The present invention generally relates to methods and systems for hydrogen production and storage. More specifically, the present invention is related to optimizing at least a part of a hydrogen production plant.

### BACKGROUND OF THE INVENTION

The political landscape of today's society strives for an increased use of renewable energy sources and for industrial processes which are environmental friendly and which may use power provided from these sources. Related to this is the area of energy storage, which is becoming an important asset in connection with electrical power grids comprising and/or connected to renewable energy sources.

Hydrogen, H₂, can be used as a chemical feed-stock and processing gas, or as an energy carrier for energy applications. Depending on the type of hydrogen production used, different colors are often assigned to the hydrogen within the energy industry. For example, green hydrogen is produced or extracted using method(s) that do not produce greenhouse gas (GHG) emissions. The production of blue hydrogen produces GHGs, but carbon capture and storage technologies capture and store the emissions, whereas grey hydrogen production does not capture the emissions. Brown hydrogen (from brown coal) and black hydrogen (from black coal) are produced via gasification, converting carbon-rich materials into hydrogen and carbon dioxide (CO₂), and releasing the CO₂ into the atmosphere. It is desirable to produce hydrogen in the most environmentally friendly way possible, i.e. to avoid brown and/or black hydrogen, and prioritize green hydrogen. Comparing hydrogen as an energy carrier with hydrocarbon fuels, hydrogen is unique in dealing with emissions and most notably greenhouse gas emissions because hydrogen energy conversion has potentially no emissions other than water vapor.

The use of hydrogen will furthermore play an important role in the ongoing development of steel production. In typical steel production, carbon is used as a reductant to transform iron ore into iron which is further processed into steel. However, the carbon reductant can be replaced with hydrogen, which may result in a steel production process which is virtually emissions-free. Hence, there is a wish to develop the ability to produce and store hydrogen for numerous applications, wherein steel production constitutes a highly interesting area for the use of the produced/stored hydrogen.

Green hydrogen production facilities are typically powered by electricity from an electrical power grid or dedicated captive ("off-grid") power plants. For example, the facilities may produce hydrogen from electricity through electrolysis and may store hydrogen, e.g. in a tank between the electrolyzers and downstream consumers. These hydrogen production facilities can be built at industrial production sites. The hydrogen can then be consumed by an on-site hydrogen consumer, e.g., a direct-reduced iron (DRI) plant for green iron production. Alternatively, they may inject hydrogen into pipeline infrastructure, which transports the gas to an off-site consumer.

There are challenges related to facilities of hydrogen production, both concerning the provision and selection of components, the operations or processes thereof, etc. as well as the provision of green electricity, and associated costs, to such facilities. These challenges may result in long lead times for project development and sub-optimal facility design, leading to, for example, increased costs. Therefore, it is desirable to be able to plan hydrogen production facilities or plants taking these factors into consideration, in order to achieve a desired production and storage of hydrogen whilst minimizing costs.

Hence, it is an object of the present invention to try to overcome at least some of the challenges related to the production and storage of hydrogen by electrical power provided from an electrical power source, and to provide a method and system related to an optimization of hydrogen production and/or storage management based on hydrogen plant constituents and associated costs.

### SUMMARY OF THE INVENTION

It is of interest to provide a method and system related to hydrogen production and/or storage management which aim to achieve a desired production and storage of hydrogen whilst taking into account hydrogen plant constituents and associated costs.

This and other objects are achieved by providing a method, systems and a computer program product having the features in the independent claims. Preferred embodiments are defined in the dependent claims.

Hence, according to a first aspect of the present invention, there is provided a method of optimizing at least a part of a hydrogen, H₂, production plant arranged to be connected to an electrical power grid. The method comprises obtaining a first set of data associated with a plurality of component categories of the at least a part of the hydrogen production plant, wherein each component category of the plurality of component categories comprises at least one component category type. The first set of data comprises a first subset associated with a capital expenditure of each component category type, and a second subset associated with an operational expenditure of each component category type. The method further comprises obtaining a second set of data associated with a cost of electrical power from the electrical power grid for supply to the at least a part of the hydrogen production plant, and obtaining a third set of data associated with at least one ancillary service associated with the electrical power grid. The method further comprises determining the at least a part of the hydrogen production plant by a combination of the at least one component category type based on at least one optimization criterion as a function of the first set of data, the second set of data, and the third set of data.

According to a second aspect of the present invention, there is provided a system of optimizing at least a part of a hydrogen, H₂, production plant arranged to be connected to an electrical power grid. The system comprises a processor arranged to obtain a first set of data associated with a plurality of component categories of the at least a part of the hydrogen production plant, wherein each component category of the plurality of component categories comprises at least one component category type. The first set of data comprises a first subset associated with a capital expenditure of each component category type, and a second subset associated with an operational expenditure of each component category type. The processor is further arranged to obtain a second set of data associated with a cost of electrical power from the electrical power grid for supply to the at least a part of the hydrogen production plant, and a third set of data associated with at least one ancillary service associated with the electrical power. The processor is further configured to determine the at least a part of the hydrogen production plant by a combination of the at least one component category type based on at least one optimization criterion as a function of the first set of data, the second set of data, and the third set of data.

According to a third aspect of the present invention, there is provided a system for hydrogen production, comprising the at least a part of the hydrogen production plant optimized by the method according to the first aspect of the present invention.

According to a fourth aspect of the present invention, there is provided a computer program comprising computer readable code for causing a computer to carry out the method according to the first aspect of the present invention when the computer program is carried out on the computer.

Thus, the present invention is based on the idea of providing a method, systems, and a computer program based on an optimization of at least a part of a hydrogen, H₂, production plant. The common general concept of the present invention comprises a determination or selection of hydrogen production plant constituents for hydrogen production and storage by taking into account costs associated with these constituents and costs (and/or revenues) associated with an electrical power grid coupled to the hydrogen production plant.

The present invention is advantageous in that it efficiently and conveniently achieves a planning/optimization of constituents of a hydrogen production plant for a desired and/or demanded production and storage of hydrogen whilst optimizing (minimizing) costs related to the electrical power for such a production and/or storage. More specifically, the present invention optimizes the combination of the constituents (component category types) of the hydrogen production plant, with respect to e.g. technology and/or capacity, in order to produce and store hydrogen in a cost-efficient manner based on capital and operational expenditures as well as ancillary service(s).

It will be appreciated that an increase of (renewable) electrical power sources such as e.g. wind and/or solar energy source(s) may lead to production and/or frequency imbalances in the supply of electrical power to a hydrogen production plant caused by variations in the energy production. By the method and systems of the present invention, based on the idea of optimizing at least part of a hydrogen production plant taking into account costs (and/or revenues) associated with the electrical power, which in turn is affected by these possible fluctuations as described, a convenient and efficient optimization of the hydrogen production plant is achieved.

The present invention is further advantageous in that it provides an optimization of a hydrogen production plant for production and storage of hydrogen which may balance load and frequency in the supply of electrical power. Hence, electrical power grid operators may be supported in keeping the stability of the load and/or frequency in the electrical power grid.

The present invention is further advantageous in that the production of hydrogen by the hydrogen production plant is environmentally friendly. Notably, the hydrogen production plant produces green hydrogen, meaning that the process(es) of the hydrogen production plant do not produce GHG emissions.

According to the first aspect of the present invention, there is provided a method of optimizing at least a part of a hydrogen, H₂, production plant arranged to be connected to an electrical power grid. By the term "hydrogen production plant", it is here meant substantially any plant, facility, arrangement, system, or the like, which is able to produce or generate hydrogen.

By the term "electrical power grid", it is here meant substantially any electrical power grid which is able to generate, distribute, provide an/or supply electrical power. According to an alternative definition, the term "electrical power grid" may mean an interconnected network for electricity generation and/or delivery from producer(s) to consumer(s). It should be noted that the electrical power grid may encompass renewable energy sources which may be configured and/or able to generate, provide and/or supply electrical power.

The method comprises the step of obtaining (e.g. receiving) a first set of data associated with a plurality of component categories of the at least a part of the hydrogen production plant, wherein each component category of the plurality of component categories comprises at least one component category type. By the term "component category", it is here meant substantially any category, classification, group, or the like, of a component or constituent of the hydrogen production plant for the production and/or storage of hydrogen, such as electrolyzer(s), hydrogen storage unit(s), compressor(s), water purification unit(s), cooling unit(s), piping/cabling, (electrical) distribution system(s), etc. By the term "component category type", it is here meant substantially any type, sort, class, or the like, with respect to the component category. In other words, the "component category" may constitute a class, and the "component category type" may constitute a sub-class of that class.

The first set of data comprises a first subset associated with a capital expenditure of each component category type, and a second subset associated with an operational expenditure of each component category type. By the term "capital expenditure", it is meant any cost(s), expense(s) and/or fund(s) to acquire, upgrade, maintain and/or service physical assets, components and/or constituents. More specifically, it is here meant any cost(s), expense(s) and/or fund(s) to acquire, upgrade, maintain and/or service the component category types of the at least a part of the hydrogen production plant. By the term "operational expenditure" (also "operating expense") it is meant any cost(s) and/or expense(s) related to the operation(s) and/or process(es) of the production. More specifically, it is here meant any cost(s) and/or expense(s) related to the operation(s) and/or process(es) of the at least a part of the hydrogen production plant. Hence, the first set of data comprises a first subset (of data) which is associated and/or related to (e.g. comprises) the capital expenditure of each component category type, and further comprises a second subset (of data) which is associated and/or related to (e.g. comprises) the operational expenditure of each component category type.

The method further comprises obtaining a second set of data associated with a cost of electrical power from the electrical power grid for supply to the at least a part of the hydrogen production plant. Hence, the second set of data is associated and/or related to (e.g. comprises) a cost of electrical power, wherein the electrical power is arranged to be supplied (provided) to the at least a part of the hydrogen production plant. It will be appreciated that the cost (or price) of electrical power, and the optimization thereof, may be denoted "power arbitrage".

The method further comprises obtaining a third set of data associated with at least one ancillary service associated with the electrical power grid. Hence, the third set of data is associated and/or related to (e.g. comprises) one or more ancillary services associated with the electrical power grid and/or the electrical power supplied (provided) from, and/or supplied (provided) to, the electrical power grid. As an alternative definition and/or formulation, the third set of data comprises information of at least one ancillary service associated with the electrical power (grid). It should be noted that the third set of data may be associated with a cost and/or revenue of the ancillary service(s). By the term "ancillary service" it is here meant an ancillary or balancing service or function that helps electrical power grid operators maintain a reliable electricity system such as maintaining a proper flow and direction of electricity, addressing imbalances between supply and demand, and/or helping the system recover after a power system event. Alternatively, by the term "ancillary service" it is here meant an ancillary or balancing service which supports the transmission of electric power from electrical power sources to consumers given the obligations of control areas and transmission utilities within those control areas to maintain reliable operations of an interconnected transmission system.

The method further comprises determining the at least a part of the hydrogen production plant by a combination of the at least one component category type based on at least one optimization criterion as a function of the first set of data, the second set of data, and the third set of data. Hence, the method comprises the step of determining and/or selecting the at least a part of the hydrogen production plant by a combination and/or selection of the component category type(s) for hydrogen production and/or storage based on one or more optimization criterions based on (as a function of) the first, second and third sets of data, wherein the first, second and third sets of data are respectively associated with capital expenditure and operation expenditure of the component category type(s) and ancillary service(s). By "optimization criterion", it is here meant any criterion, condition, constraint, (cost) function, or the like. More specifically in this context, the one or more optimization criterions is used for the determination and/or selection of the component category type(s) of the at least a part of the hydrogen production plant, wherein the optimization criterion(s) is (are) dependent on (based on, a function of) the first, second and third sets of data.

According to an embodiment of the present invention, the third set of data may be associated with a cost of the at least one ancillary service associated with at least one of the capital expenditure of each component category type, the operational expenditure of each component category type, and the electric power. Hence, the third set of data may be associated and/or related to (e.g. comprise) a cost (expense) of the ancillary service(s), wherein the cost may be (associated with) the capital expenditure of each component category type, the operational expenditure of each component category type and/or the electric power. The present embodiment is advantageous in that the determination of the at least a part of the hydrogen production plant, i.e. the determination or selection of hydrogen production plant constituent(s), may be even more effective by specifically taking into account ancillary service cost(s).

According to an embodiment of the present invention, the method may further comprise at least one of estimating a level of hydrogen stored, L_{S}, by the at least a part of the hydrogen production plant, and estimating a level of hydrogen production, L_{P}, by the at least a part of the hydrogen production plant, wherein the third set of data is associated with a revenue of the at least one ancillary service as a function of at least one of the estimated level of hydrogen stored, L_{S}, and the estimated level of hydrogen production, Lp. Hence, the method may comprise estimating the level of hydrogen stored, L_{S}, and/or the level of hydrogen production, Lp, by the at least a part of the hydrogen production plant, wherein the third set of data is associated with a revenue of the ancillary services) as a function the estimated level of hydrogen stored, L_{S}, and/or the estimated level of hydrogen production, Lp. In other words, the third set of data may be associated and/or related to (e.g. comprise) a revenue (i.e. income, earning and/or profit) of the ancillary service(s) as a function of the estimated levels L_{S} and/or Lp by the at least a part of the hydrogen production plant. The present embodiment is advantageous in that the method takes into account the revenue of the ancillary service(s) as a function of the predicted or estimated levels L_{S} and/or Lp. For example, based on the estimated level of hydrogen stored, L_{S}, a capacity may be reserved (e.g. for the following day), and a revenue may be obtained from a grid operator for this stored capacity. Analogously, revenue may be obtained from a grid operator based on the level of hydrogen production, L_{P}. Consequently, the present embodiment leads to an even further improved method for hydrogen production plant optimization.

According to an embodiment of the present invention, the method may further comprise estimating a level of hydrogen production, L_{P}, by the at least a part of the hydrogen production plant, wherein determining the at least a part of the hydrogen production plant by a combination of the at least one component category type is further based on the at least one optimization criterion as a function of a minimization of a ratio, R, between a total cost, T, associated with the first set of data, the second set of data, and the third set of data, and the estimated level of hydrogen production, Lp. Hence, the step of determining and/or selecting the at least a part of the hydrogen production plant by a combination of the component category type(s) may further be based on optimization criterion(s) as a function *of min* (R=T/L_{P}). It will be appreciated that a competitiveness of the hydrogen production plant may be measured by the minimization of the ratio, R. An example and/or subclass of the ratio, R, is the levelized cost of hydrogen, LCOH, which is the sum of CAPEX and OPEX relative to hydrogen output, which, for example, may be expressed in a mathematical formula as LCOH=[(discounted) CAPEX+(discounted) OPEX-(discounted) OPEX reduction]/[(discounted) output]. The present embodiment is advantageous in that an even further ameliorated optimization of the (at least a part of) the hydrogen production plant is achieved.

According to an embodiment of the present invention, the first set of data may further comprise a third subset associated with at least one of a capacity and size of the at least one component category type. Hence, the first set of data may comprise a third subset associated with the capacity and/or size of the component category types(s), such as capacity and/or size of hydrogen production plant constituents, such as electrolyzer(s), hydrogen storage unit(s), etc. The present embodiment is advantageous in that determination of the at least a part of the hydrogen production plant, i.e. the determination or selection of hydrogen production plant constituent(s), may be even more effective.

According to an embodiment of the present invention, the method may further comprise estimating at least one of a first future cost of electrical power from the electrical power grid for supply to the at least a part of the hydrogen production plant, and a second future cost of the at least one ancillary service associated with the electrical power for supply to the at least a part of the hydrogen production plant, wherein determining the at least a part of the hydrogen production plant by a combination of the at least one component category type is further based on the at least one optimization criterion as a function of at least one of the first future cost and the second future cost. By the term "future cost", it is here meant a predicted or estimated cost, i.e. a forthcoming cost as predicted or estimated of the electrical power (first future cost) and of the ancillary service(s) (second future cost). In other words, the method may estimate or predict first and/or second future cost(s) related to electrical power and ancillary service(s), respectively, and determine constituents of the hydrogen production plant accordingly. The present embodiment is advantageous in that the hydrogen production plant determination/optimization based on predicted/estimated cost(s) improves the method via a cost-efficient production and/or storage of hydrogen.

According to an embodiment of the present invention, the method may further comprise estimating operational degradation of each component category type, estimating a future operational expenditure of each component category type as a function of the estimated operational degradation of each component category type, wherein determining the at least a part of the hydrogen production plant by a combination of the at least one component category type is further based on the at least one optimization criterion as a function of the future operational expenditure. By the term "operational degradation", it is here meant e.g. wear (of the component category type(s)) as a result of operation. By the term "future operation expenditure", it is here meant a predicted or estimated operation expenditure, i.e. a forthcoming cost or expenditure as a result of the operational degradation of the component category type(s). The present embodiment is advantageous in that the hydrogen production plant determination/optimization is based not only on (present, current) operational expenditure(s), but also on forthcoming predicted/estimated operational expenditure(s), thereby even further improving the hydrogen production plant optimization method.

According to an embodiment of the present invention, the at least one optimization criterion may be associated with a minimization of emissions associated with at least one of a production of the at least a part of the hydrogen production plant, and an operation of the at least a part of the hydrogen production plant. By the term "emissions", it is here meant undesired and/or harmful emissions, such as pollutant gases, greenhouse gases, etc. In other words, the optimization criterion(s) of the method may be associated with a minimization of (undesired/harmful) emissions associated with the production (e.g. material, construction, etc.) of the hydrogen production plant and/or its operation. For example, the optimization criterion may be associated with a minimization of carbon dioxide, CO₂, production. The present embodiment is advantageous in that it may form part of a life cycle assessment, LCA, of the hydrogen production plant. The present embodiment is further advantageous in that the hydrogen production plant determination/optimization by the method may even further reduce the CO₂ production/emission footprint.

According to an embodiment of the present invention, the method may further comprise obtaining a fourth set of data associated with at least one constraint associated with the at least one component category type, wherein determining the at least a part of the hydrogen production plant by a combination of the at least one component category type is further based on the at least one optimization criterion as a function of the fourth set of data. It will be appreciated that the constraint(s) may be substantially any constraint(s), limitation(s), condition(s), or the like, of the (and/or associated with the) component category type(s). The present embodiment is advantageous in that the combination of the component category type(s) in the method's determination of the hydrogen production plant becomes even more improved by taking into account the component category type constraint(s).

According to an embodiment of the present invention, the method may further comprise obtaining a fifth set of data associated with at least one constraint associated with at least one of the second set of data and the third set of data, wherein determining the at least a part of the hydrogen production plant by a combination of the at least one component category type is further based on the at least one optimization criterion as a function of the fifth set of data. It will be appreciated that the constraint(s) may be substantially any constraint(s), limitation(s), condition(s), or the like, of the cost of electrical power from the electrical power grid (which the second set of data is associated with) and/or the ancillary service(s) (which the third set of data is associated with). The present embodiment is advantageous in that the combination of the component category type(s) in the method's determination of the hydrogen production plant becomes even more improved by taking into account one or more constraints of the cost of electrical power and/or the cost/revenue of ancillary services.

According to an embodiment of the present invention, the plurality of component categories may comprise at least one of an electrolyzer, piping, and a hydrogen storage unit. By "electrolyzer", it is here meant any electrochemical arrangement, unit, system, or the like, that uses electricity to break water into hydrogen and oxygen in an electrolysis process. By the term "piping", it is here meant a quantity or system of pipes, pipelines, etc., which may be configured to store hydrogen. By the term "electrochemical arrangement", it is here meant an arrangement, device, unit, or the like which is configured to convert electrical power (energy) into chemical energy or vice versa, i.e. to convert chemical energy into electrical power (energy), such as an electrolytic cell, an electrochemical cell or a galvanic cell. In other terms, the electrochemical arrangement(s) constitute equipment arranged to facilitate the evolution of hydrogen via electrochemical reactions. By "hydrogen storage unit", it is here meant any unit, system, or the like, which is able to store hydrogen, such as pressurized storage units, liquified storage units, chemical storage units, piping (pipelines), etc.

According to an embodiment of the present invention, the at least one component category type may comprise at least one of a polymer electrolyte membrane, PEM, electrolyzer, a solid oxide electrolyzer cell, SOEC, electrolyzer, an alkaline water electrolysis, AWE, electrolyzer, an anion exchange membrane, AEM, electrolyzer, a pressurized alkaline electrolyzer, and an electrochemical thermally activated chemical, E-TAC, arrangement. It should be noted that the mentioned electrolyzers and the E-TAC arrangement may, in more general terms, be called electrochemical arrangements, electrochemical hydrogen producing devices, or the like. Hence, the component category type(s) may comprise one or more electrochemical arrangement(s) in the form of PEM, SOEC, AWE, AEM and/or pressurized alkaline electrolyzer(s). It should be noted that the disclosed electrolyzers have different properties, modes of operation, efficiency, etc., and the method of the present embodiment may combine the electrolyzer(s) accordingly in its optimization of the (part of the) hydrogen production plant. For example, the method may combine electrolyzers of a same category type or sort (e.g. only PEM electrolyzer(s)). By this optimization, the present embodiment is advantageous in that the method may achieve a hydrogen production plant with an even higher efficiency related to the hydrogen production and/or storage, as well as the cost related thereto.

According to an embodiment of the present invention, the hydrogen production plant may be arranged to be coupled to at least one hydrogen consumption unit, wherein the at least one optimization criterion is further associated with a demand for hydrogen at the at least one hydrogen consumption unit. Hence, the method of optimizing the (part of the) hydrogen production plant is further based on a demand for hydrogen at one or more hydrogen consumption unit(s), wherein the demand may be steady (constant) or varying (fluctuating). By the term "hydrogen consumption unit", it is meant substantially any unit, device, arrangement, process, or the like, which is configured or arranged to consume hydrogen during operation, e.g. a DRI plant for iron production. The present embodiment is advantageous in that the method is configured to achieve an even further improved optimization of the constituents of the hydrogen production plant based on the hydrogen demand at the hydrogen consumption unit(s).

According to an embodiment of the present invention, the at least one optimization criterion may further be associated with at least one constraint of the electrical power grid. It will be appreciated that the constraint(s) may be substantially any constraint(s), limitation(s), condition(s), or the like, of the power grid. For example, the constraint(s) may be related to technological constraint(s) and/or economical constraint(s) of the power grid. An example of an economical constraint(s) of the power grid may be electrical power purchase agreements.

According to an embodiment of the present invention, the at least one ancillary service may comprise at least one of a frequency containment reserve normal, FCR-N, service, a frequency containment reserve disturbance, FCR-D, service, an automatic frequency restoration reserve, aFRR, service, a manual frequency restoration reserve, mFRR, service, a fast frequency reserve, FFR, service, a replacement reserve, RR, service, a balancing mechanism, BM, service, an enhanced frequency response, EFR, service, a demand side response, DFR, service, a demand turn up, DTU, service, a firm frequency response, FFR, service, a fast reserve, FR, service, a short term operating reserve, STOR, service, a dynamic containment, DC, service, and a transmission constraint management, TCM, service. It will be appreciated that different countries or geographical regions may have different names of the ancillary services. Hence, the ancillary or balancing service(s) associated with the electrical power provided from the electrical power grid may comprise one or more of the services described. The present embodiment is advantageous in that the method may determine the hydrogen production plant constituents based on substantially any ancillary service or any combination of ancillary services.

According to an embodiment of the present invention, there is provided an arrangement for hydrogen production, comprising the system for hydrogen production according to the third aspect of the present invention, and an electrical power grid arranged for a supply of electrical power to the system for hydrogen production.

Further objectives of, features of, and advantages with, the present invention will become apparent when studying the following detailed disclosure, the drawings and the appended claims. Those skilled in the art will realize that different features of the present invention can be combined to create embodiments other than those described in the following.

### BRIEF DESCRIPTION OF THE DRAWINGS

This and other aspects of the present invention will now be described in more detail, with reference to the appended drawings showing embodiment(s) of the invention.
Figs. 1 and 2 schematically show methods according to exemplifying embodiments of the present invention, and
Fig. 3 schematically shows an arrangement according to an exemplifying embodiment of the present invention.

### DETAILED DESCRIPTION

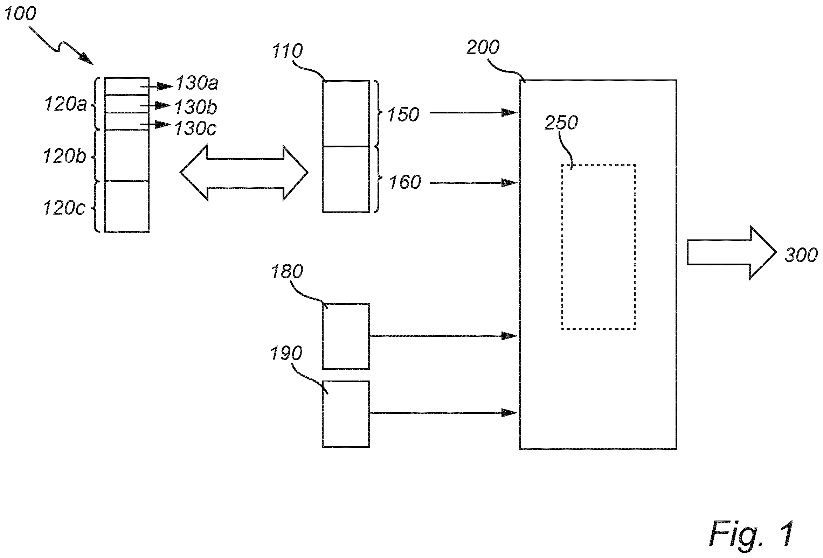

Fig. 1 schematically shows a method 100 of optimizing at least a part of a hydrogen, H₂, production plant 300 arranged to be connected to an electrical power grid (not shown) according to an exemplifying embodiment of the present invention. The hydrogen production plant 300 may substantially be any plant, facility, arrangement, system, or the like, which is able to produce or generate hydrogen. The electrical power grid may substantially be any electrical power grid which is able to generate, distribute, provide an/or supply electrical power.

The method 100 comprises the step of obtaining a first set of data 110. The first set of data 110 is associated with a plurality of component categories 120a-c of the at least a part of the hydrogen production plant 300. It will be appreciated that there may be substantially any number of component categories 120a-c, and that Fig. 1 comprises three component categories 120a-c as an example. The component categories 120a-c may substantially be any category, classification, group, or the like, of a component or constituent of the hydrogen production plant 300, such as electrolyzer(s), hydrogen storage unit(s), compressor(s), water purification unit(s), cooling unit(s), piping/cabling, (electrical) distribution system(s), etc. Hence, the component categories 120a-c may represent a catalogue of hydrogen production plant 300 components. In turn, the component categories 120a-c comprise component category types 130a-c. The component category types 130a-c may substantially be any type, sort, class, or the like, with respect to the component categories 120a-c. Analogously with the component categories 120a-c, the component category types 130a-c may represent a catalogue of component category types of the (at least a part of the) hydrogen production plant 300. For example, in case the component category 120a is (an) electrolyzer, the component category types 130a-c may be (a) PEM electrolyzer(s) 130a, (a) SOEC electrolyzer(s) 130b, and (a) AWE electrolyzer(s) 130c. The component category(ies) 120b and/or 120c may, correspondingly, comprise respective component category types. Analogously with the arbitrary number of component categories 120a-c, the number of component category types 130a-c is (also) arbitrary.

The first set of data comprises a first subset 150 associated with a capital expenditure (CAPEX) of each component category type 130a-c, wherein the capital expenditure may be any cost(s), expense(s) and/or fund(s) to acquire, upgrade, maintain and/or service physical assets, components and/or constituents of the at least a part of the hydrogen production plant 300. For example, variables to impact CAPEX may include the technology of the component category type 130a-c (e.g. electrolyzer technology), the capacity and/or storage type of the component category type 130a-c (e.g. capacity of hydrogen storage unit(s)). The CAPEX may be caused by overcapacity of the component category type 130a-c (e.g. electrolyzers) and/or hydrogen storage buffer for enabling temporary increase/decrease in hydrogen production to reserve and activate ancillary capacity while maintaining the required/desired hydrogen production output.

The first set of data further comprises a second subset 160 associated with an operational expenditure (OPEX) of each component category type 130a-c, wherein the operational expenditure may imply any cost(s), expense(s) and/or fund(s) to acquire, upgrade, maintain and/or service physical assets, components and/or constituents of the at least a part of the hydrogen production plant 300. For example, variables to impact OPEX may include the technology and/or capacity of the component category type 130a-c (e.g. electrolyzer technology and/or capacity), the capacity and/or storage type or size of the component category type 130a-c (e.g. capacity of hydrogen storage unit(s)), operational loads of the component category type 130a-c, power (electricity) arbitrage (e.g. Power Purchase Agreements, PPA, spot markets, etc.), the electrical power grid, participation in ancillary service(s), net cost of electricity (comprised of price for electricity and revenue from ancillary service participation), efficiency degradation of the component category type 130a-c, secondary revenue streams, including sales of oxygen (electrolysis by-product) and district heating, etc. The OPEX may be associated with the operation of component category type 130a-c (e.g. electrolyzers) deviating from a desired nominal load depending on the activation, affecting degradation of the component category type 130a-c (implying a higher maintenance cost) and of the component category type 130a-c efficiency (implying higher cost per hydrogen production output).

The method 100 further comprises obtaining a second set of data 180 associated with a cost of electrical power from the electrical power grid ("power arbitrage") for supply to the at least a part of the hydrogen production plant 300. According to an example, not shown in Fig. 1, the second set of data 180 may further be associated with weather data associated with the electrical power grid. By the term "weather data", it is here meant data related and/or associated with the weather, wherein the weather data in turn is related and/or associated with the electrical power grid and/or the (cost) of electrical power. For example, the weather data may comprise actual (current, present) weather data and/or forecast weather data. Furthermore, the weather data may be related to substantially any kind of weather, such as sun, wind, precipitation, etc. For example, in case of relatively strong winds during a period in time (either current and/or forecast), the weather data may indicate a relatively high level of electrical power from wind power source(s) provided in the electrical power grid, which furthermore may influence the second set of data 180 associated with a cost of electrical power and/or the third set of data 190 associated with the ancillary service(s).

The method 100 further comprises obtaining a third set of data 190 associated with at least one ancillary service associated with the electrical power grid. For example, the third set of data 190 may be associated with a cost of the ancillary service(s) associated with one or more of the capital expenditure of each component category type 130a-c, the operational expenditure of each component category type 130a-c, and the electric power from the electrical power grid. The ancillary (balancing) service(s) may, for example, comprise one or more of a FCR-N, FCR-D, mFRR, FFR, RR, BM, EFR, DFR, DTU, FR, STOR, DC and/or TCM service. The third set of data 190 may further be associated with data of activation pattern(s) of ancillary service(s) for estimating revenues from activation of the ancillary service(s). The third set of data 190 may further be associated with specification(s) of the mechanisms of the ancillary service(s), such as (maximum) activation times, how much power (e.g. in MW) a single participant is allowed to supply, etc. This may be desired for the evaluation how much storage buffer and/or (electrolyzer) capacity may need to be allocated to an ancillary service and as such what the CAPEX of the participation will be.

In Fig. 1, the method 100 is exemplified as having the first set of data 110 (comprising the first and second subsets 150, 160), the second set of data 180 and the third set of data 190 as inputs.

The method 100 further comprises determining 200 the at least a part of the hydrogen production plant 300. The determination 200 by the method 100 is performed by a combination of the component category type(s) 130a-c based on one or more optimization criterions 250 as a function of the first set of data 110 (which in turn comprises first and second subsets 150, 160 associated with CAPEX and OPEX) the second set of data 180 (associated with the cost of electrical power), and the third set of data 190 (associated with the ancillary service(s)). As indicated in Fig. 1, the method 100 comprises the step of determining 200 and/or selecting the at least a part of the hydrogen production plant 300 by a combination and/or selection of the component category type(s) 130a-c based on one or more optimization criterions 250 (as schematically indicated by the dashed rectangle) based on (as a function of) the inputs of the first, second and third sets of data 110, 180, 190. In other words, the method 100 may be expressed as an algorithm that optimizes the at least a part of the hydrogen production plant 300 by the optimal dimensioning, configuration, etc., of the constituents of the hydrogen production plant 300 within given constraints. In other terms, the method 100 comprises the determination/selection of optimal technology of the component category type(s) 130a-c, such as electrolyzer and/or storage unit technologies, compressor and/or transformer types, etc.). The method/algorithm 100 may support (combinations of multiple) technologies such as electrolyzer and/or storage technologies, electricity cost reduction (e.g. through power arbitrage (PPA), spot markets, etc.), electricity cost reduction through public grid vs. captive "off-grid" electricity supply, electricity cost reduction through ancillary grid service participation, etc., in order to determine (calculate) an optimal (i.e., most competitive) dimensioning and/or configuration of at least a part of a hydrogen production plant from hardware specifications, electricity prices and/or constraints.

The method 100 may, for example, comprise the optimization criterion 250 of optimizing (minimizing) the levelized cost of hydrogen, LCOH, which is the sum of CAPEX and OPEX relative to hydrogen output, which, for example, may be expressed in a mathematical formula as LCOH=[(discounted) CAPEX+(discounted) OPEX-(discounted) OPEX reduction]/[(discounted) output]. It should be noted that the optimization criterion 250 may alternatively be associated with an optimization of LCOH in conjunction with other output metrics, such as e.g., trading off LCOH reduction against CAPEX, OPEX, CO₂ minimization, favor locally-sourced component category types 130a-c, etc., within given constraints and/or with a given importance score.

According to an example of the method 100, the method 100 may comprise a tri-level (nested) optimization approach, with lower level, mid-level, and upper level optimization steps (not shown). The lower level applies path-search algorithms, e.g., Dijkstra's shortest path, A^{∗}, Monte Carlo tree search (MCTS) to calculate optimal energy market participation of the hydrogen production plant 300 by combining, e.g., custom modelling of revenues from and hardware (component category types 130a-c) reserves required to deliver each ancillary service(s), the CAPEX of this reserve capacity, revenues from energy arbitrage, how operations of component category types 130a-c (e.g. electrolyzers) at specific load levels (for ancillary service activation or power arbitrage) affects OPEX, e.g., through degradation or efficiency loss, etc. The mid-level applies derivative-free optimization algorithms, e.g., Multilevel Coordinate Search (MCS), Bayesian optimization, calculation of the optimal ancillary service participation in this context (remaining capacity used for power arbitrage), etc. The method 100 may combine the (estimated) hydrogen output with vendor CAPEX and OPEX data to compute the LCOH. The upper-level optimization of the method 100 applies derivative-free optimization algorithms to find the optimal hardware configuration of the at least a part of the hydrogen production plant 300 by the component category types 130a-c, so that when it is being optimally run (as defined by the output of the mid-level), the resulting LCOH is minimal.

The method 100 may further comprise estimating a first future cost of electrical power from the electrical power grid for supply to the at least a part of the hydrogen production plant 300 and/or a second future cost of the ancillary service(s) associated with the electrical power for supply to the at least a part of the hydrogen production plant 300, wherein determining 200 the at least a part of the hydrogen production plant 300 is further based on the optimization criterion(s) 250 as a function of the first and/or second future cost(s). Alternatively, or in combination, the method 100 may further comprise estimating operational degradation of each component category type 130a-c and estimating a future operational expenditure of each component category type 130a-c accordingly, wherein determining the at least a part of the hydrogen production plant 300 is further based on the optimization criterion(s) 250 as a function of the future operational expenditure. An example of the "operational degradation" may, for example, comprise ramping up and/or ramping down with a (relatively) large level of hydrogen in the hydrogen storage unit.

The estimation/prediction performed by the method 100 of the first and/or second future cost(s), the operational degradation and/or future operational expenditure may be performed by at least one machine learning, ML, model. By "machine learning, ML, model", it is here meant a model comprising one or more computer algorithms that improve automatically through experience and by the use of data. For example, the ML model(s) may comprise algorithms based on ARIMA (Auto Regressive Integrated Moving Average), ANN (Artificial Neural Network), etc. It will be appreciated that details of the ML model(s), comprising one or more computer algorithms that improve automatically through experience and by the use of data, are known to the skilled man and are therefore omitted.

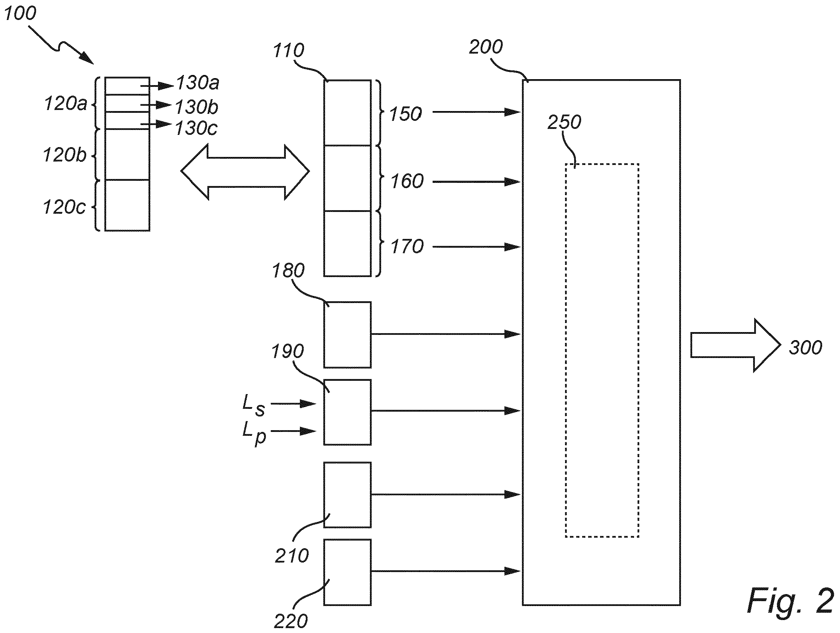

Fig. 2 schematically shows a method 100 of optimizing at least a part of a hydrogen, H₂, production plant 300 arranged to be connected to an electrical power grid (not shown) according to an exemplifying embodiment of the present invention. It will be appreciated that Fig. 2 has many features in common with the method as shown in Fig. 1, and it is referred to Fig. 1 and the associated text for an increased understanding and for references of method step(s) and/or element(s).

In Fig. 2, in addition to the method 100 as exemplified in Fig. 1, the first set of data 110 further comprises a third subset 170 associated with the capacity and/or size of the component category type(s) 130a-c. In combination with the third subset 170, or independently thereof, the method 100 may further comprise obtaining a fourth set of data 210 associated with one or more constraints associated with the component category type(s) 130a-c, wherein the step of determining 200 the at least a part of the hydrogen production plant 300 by a combination of the component category type(s) 130a-c is further based on the one or more optimization criterion(s) 250 as a function of the fourth set of data 210. For example, the constraints associated with the component category type(s) 130a-c may include e.g. available and/or allowed technologies and/or vendors of electrolyzers, storage units, required hydrogen output, etc.

In combination with the third subset 170 and/or fourth set of data 210, or independently thereof, the method 100 may further comprise obtaining a fifth set of data 220 associated with one or more constraints associated with the second set of data 180 and/or the third set of data 190, wherein determining 200 the at least a part of the hydrogen production plant 300 by a combination of the component category type(s) 130a-c is further based on the optimization criterion(s) 250 as a function of the fifth set of data 220. For example, the constraints associated with the second set of data 180 and/or the third set of data 190 may include e.g. electrical power purchase agreements, current and future allowed extent of ancillary service participation, tolerable overall investment cost, etc.

Fig. 2 further comprises the example in which the method 100 further comprises estimating a level of hydrogen stored, L_{S}, by the at least a part of the hydrogen production plant 300, and estimating a level of hydrogen production, L_{P}, by the at least a part of the hydrogen production plant 300, wherein the third set of data 190 is associated with a revenue of the ancillary service(s) as a function of the estimated level of hydrogen stored, L_{S}, and/or the estimated level of hydrogen production, Lp. Hence, the third set of data 190 may be associated and/or related to (e.g. comprise) a revenue (i.e. income, earning and/or profit) of the ancillary service(s) as a function of the estimated levels L_{S} and/or Lp by the at least a part of the hydrogen production plant 300. For example, based on the estimated level of hydrogen stored, L_{S}, a capacity may be reserved (e.g. for the following day), and a revenue may be obtained from a grid operator for this stored capacity, and the method 100 may optimize the hydrogen production plant as a function thereof. Analogously, revenue may be obtained from a grid operator based on the level of hydrogen production, Lp, and the method 100 may optimize the hydrogen production plant as a function thereof. Revenues may be awarded via hourly datasets with a price paid per power (e.g. per MW) of reserved capacity during the hour (which may be paid regardless of activation) and prices paid for the activated volumes (separated prices may apply for increased and decreased consumption).

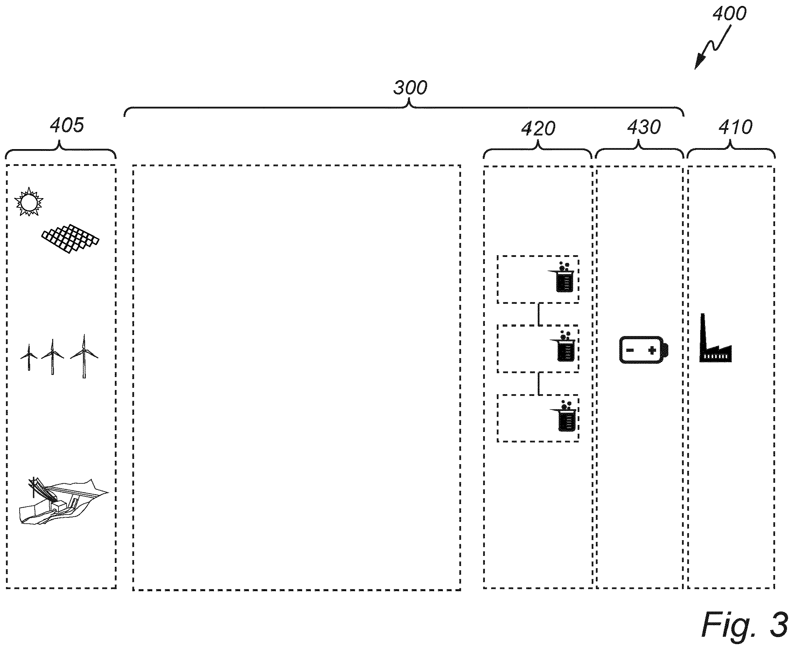

Fig. 3 schematically shows an arrangement 400 according to an exemplifying embodiment of the present invention. The arrangement 400 comprises the at least a part of the hydrogen production plant 300 optimized by the method 100 according to the first aspect of the present invention. In Fig. 3, the leftmost part of the hydrogen production plant 300, which may comprise any (technical) components, constituents, elements such as e.g, compressors, transformers, pumps, etc., is merely schematically indicated by dashed lines for reasons of simplicity. The rightmost part of the hydrogen production plant 300 comprises component category types of schematically indicated electrochemical arrangements 420. In Fig. 3, the electrochemical arrangements 420 are exemplified as three electrochemical arrangements 420, but it should be noted that the number of electrochemical arrangements 420 is arbitrary. Furthermore, the kind or type of electrochemical arrangement(s) 420 may be arbitrary, as the electrochemical arrangement(s) 420 may comprise e.g. one or more electrolytic cells configured to convert electrical power (energy) into chemical energy, and/or one or more electrochemical and/or galvanic cells configured to convert chemical energy into electrical power. The hydrogen production plant 300 may comprise a (single) kind or type of electrochemical arrangement 420 (e.g. one or more electrolytic cells) or, alternatively, a combination of electrochemical arrangements 420 of different kinds or types (e.g. one or more electrolytic cells, electrochemical cells and galvanic cells).

The hydrogen production plant 300 as exemplified in Fig. 3 further comprises at least one storage unit 430 which is coupled to the electrochemical arrangement(s) 420. The storage unit(s) 430 is (are) arranged to store the hydrogen produced by the electrochemical arrangement(s) 420. The storage unit(s) 430 is (are) exemplified as a single storage unit 430, but it should be noted that the number of storage units 430 is arbitrary.

The arrangement 400 further comprises at least one hydrogen consumption unit 410, and the hydrogen production plant 300 is coupled to the hydrogen consumption unit 410. The hydrogen consumption unit 410, arranged downstream of the storage unit 430, may be a unit and/or equipment to produce methanol, ammonia, cement and/or lime, or any unit and/or equipment associated with DRI, steel re-heating and/or steel refinery.

According to the example of Fig. 3, the arrangement 400 further comprises an electrical power grid 405. The electrical power grid 405 is arranged for supply or delivery of electrical power to the hydrogen production plant 300, wherein the electrical power grid 405 comprises electrical power source(s). The electrical power grid 405, which may comprise substantially any kind of power source(s), is exemplified in Fig. 3 as comprising a solar power source 110, a wind power source, and a water-power source. It should be noted that substantially any energy or power source (renewable or non-renewable) which is able to generate, provide an/or supply electrical power may constitute an electrical power source. The electrical power grid 405 is exemplified by connections of the exemplified electrical power sources for illustrative purposes only.

The person skilled in the art realizes that the present invention by no means is limited to the preferred embodiments described above. On the contrary, many modifications and variations are possible within the scope of the appended claims. For example, the number and/or type of component category type(s), such as electrochemical arrangements, storage units, etc., is arbitrary.

## Claims

1. A method (100) of optimizing at least a part of a hydrogen, H₂, production plant (300) arranged to be connected to an electrical power grid, the method comprising
obtaining a first set of data (110) associated with a plurality of component categories (120a-c) of the at least a part of the hydrogen production plant, wherein each component category of the plurality of component categories comprises at least one component category type (130a-c), wherein the first set of data comprises
a first subset (150) associated with a capital expenditure of each component category type, and
a second subset (160) associated with an operational expenditure of each component category type,
obtaining a second set of data (180) associated with a cost of electrical power from the electrical power grid for supply to the at least a part of the hydrogen production plant, and
obtaining a third set of data (190) associated with at least one ancillary service associated with the electrical power grid, and
determining (200) the at least a part of the hydrogen production plant by a combination of the at least one component category type based on at least one optimization criterion (250) as a function of
the first set of data, the second set of data, and the third set of data.

2. The method according to claim 1, wherein the third set of data is associated with a cost of the at least one ancillary service associated with at least one of
the capital expenditure of each component category type,
the operational expenditure of each component category type, and
the electric power.

3. The method according to claim 1 or 2, further comprising at least one of
estimating a level of hydrogen stored, L_{S}, by the at least a part of the hydrogen production plant, and
estimating a level of hydrogen production, L_{P}, by the at least a part of the hydrogen production plant,
wherein the third set of data is associated with a revenue of the at least one ancillary service as a function of at least one of
the estimated level of hydrogen stored, L_{S}, and
the estimated level of hydrogen production, L_{P}.

4. The method according to any one of the preceding claims, further comprising
estimating a level of hydrogen production, L_{P}, by the at least a part of the hydrogen production plant,
wherein determining the at least a part of the hydrogen production plant by a combination of the at least one component category type is further based on the at least one optimization criterion as a function of
a minimization of a ratio, R, between
a total cost, T, associated with the first set of data, the second set of data, and the third set of data, and
the estimated level of hydrogen production, L_{P}.

5. The method according to any one of the preceding claims, wherein the first set of data further comprises
a third subset (170) associated with at least one of a capacity and size of the at least one component category type.

6. The method according to any one of the preceding claims, further comprising estimating at least one of
a first future cost of electrical power from the electrical power grid for supply to the at least a part of the hydrogen production plant, and
a second future cost of the at least one ancillary service associated with the electrical power for supply to the at least a part of the hydrogen production plant,
wherein determining the at least a part of the hydrogen production plant by a combination of the at least one component category type is further based on the at least one optimization criterion as a function of
at least one of the first future cost and the second future cost.

7. The method according to any one of the preceding claims, further comprising
estimating operational degradation of each component category type,
estimating a future operational expenditure of each component category type as a function of the estimated operational degradation of each component category type,
wherein determining the at least a part of the hydrogen production plant by a combination of the at least one component category type is further based on the at least one optimization criterion as a function of
the future operational expenditure.

8. The method according to any one of the preceding claims, wherein the at least one optimization criterion is associated with a minimization of emissions associated with at least one of
a production of the at least a part of the hydrogen production plant, and
an operation of the at least a part of the hydrogen production plant.

9. The method according to any one of the preceding claims, further comprising
obtaining a fourth set of data (210) associated with at least one constraint associated with the at least one component category type,
wherein determining the at least a part of the hydrogen production plant by a combination of the at least one component category type is further based on the at least one optimization criterion as a function of the fourth set of data.

10. The method according to any one of the preceding claims, further comprising
obtaining a fifth set of data (220) associated with at least one constraint associated with at least one of the second set of data and the third set of data,
wherein determining the at least a part of the hydrogen production plant by a combination of the at least one component category type is further based on the at least one optimization criterion as a function of the fifth set of data.

11. The method according to any one of the preceding claims, wherein the plurality of component categories comprises at least one of
an electrolyzer,
piping, and
a hydrogen storage unit.

12. The method according to any one of the preceding claims, wherein the at least one component category type comprises at least one of
a polymer electrolyte membrane, PEM, electrolyzer,
a solid oxide electrolyzer cell, SOEC, electrolyzer,
an alkaline water electrolysis, AWE, electrolyzer,
an anion exchange membrane, AEM, electrolyzer,
a pressurized alkaline electrolyzer, and
an electrochemical thermally activated chemical, E-TAC, arrangement.

13. The method according to any one of the preceding claims, wherein the hydrogen production plant is arranged to be coupled to at least one hydrogen consumption unit, wherein the at least one optimization criterion is further associated with a demand for hydrogen at the at least one hydrogen consumption unit.

14. The method according to any one of the preceding claims, wherein the at least one optimization criterion is further associated with at least one constraint of the electrical power grid.

15. The method according to any one of the preceding claims, wherein the at least one ancillary service comprises at least one of
a frequency containment reserve normal, FCR-N, service,
a frequency containment reserve disturbance, FCR-D, service,
an automatic frequency restoration reserve, aFRR, service,
a manual frequency restoration reserve, mFRR, service,
a fast frequency reserve, FFR, service
a replacement reserve, RR, service,
a balancing mechanism, BM, service,
an enhanced frequency response, EFR, service,
a demand side response, DFR, service
a demand turn up, DTU, service,
a firm frequency response, FFR, service,
a fast reserve, FR, service,
a short term operating reserve, STOR, service
a dynamic containment, DC, service, and
a transmission constraint management, TCM, service.

16. A system of optimizing at least a part of a hydrogen, H₂, production plant (300) arranged to be connected to an electrical power grid, the system comprising
a processor arranged to obtain
a first set of data (110) associated with a plurality of component categories (120a-c) of the at least a part of the hydrogen production plant, wherein each component category of the plurality of component categories comprises at least one component category type (130a-c), wherein the first set of data comprises
a first subset (150) associated with a capital expenditure of each component category type, and
a second subset (160) associated with an operational expenditure of each component category type,
a second set of data (180) associated with a cost of electrical power from the electrical power grid for supply to the at least a part of the hydrogen production plant, and
a third set of data (190) associated with at least one ancillary service associated with the electrical power,
wherein the processor is further configured to determine (200) the at least a part of the hydrogen production plant by a combination of the at least one component category type based on at least one optimization criterion (250) as a function of
the first set of data, the second set of data, and the third set of data.

17. A system for hydrogen, H₂, production, comprising the at least a part of the hydrogen production plant optimized by the method according to any one of claims 1-15.

18. An arrangement for hydrogen, H₂, production, comprising
the system for hydrogen production according to claim 17, and
an electrical power grid arranged for a supply of electrical power to the system for hydrogen production.

19. A computer program comprising computer readable code for causing a computer to carry out the method according to any of claims 1-15 when the computer program is carried out on the computer.
